# EUROPÄISCHE PATENTSCHRIFT

(11) **EP 0 655 307 B1**
(45) Veröffentlichungstag und Bekanntmachung des Hinweises auf die Patenterteilung: **21.01.1998**
(21) Anmeldenummer: 94117252.0
(22) Anmeldetag: 02.11.1994
(51) Int. Cl.: B29C 45/54

(54) **Kunststoffspritzeinheit für grosse Spritzvolumen**
Plastic injection unit for large injection volumes
Unité de moulage pour injection de matières plastiques pour de grands volumes d'injection

(30) Priorität: 29.11.1993 DE 4340526
(43) Veröffentlichungstag der Anmeldung: 31.05.1995
(73) Patentinhaber: Hemscheidt Maschinentechnik Schwerin GmbH & Co., 19061 Schwerin (DE)
(72) Erfinder: Wegmann, Roland, Dr.-Ing., D-19053 Schwerin (DE); Fritzlar, Volker, Dipl.-Ing., D-19069 Lübstorf (DE)
(74) Vertreter: Jaap, Reinhard

(56) Entgegenhaltungen:
- DE-A- 1 554 782
- DE-A- 2 916 133
- US-A- 5 011 399

## Beschreibung

Die Erfindung betrifft eine Kunststoffspritzeinheit für große Spritzvolumen bestehend aus einem Plastifizier- und Einspritzaggregat und einer Vorkammereinspritzeinheit, die mechanisch lösbar, parallel oder spitzwinklig zueinander und miteinander verbunden sind. Das Plastifizier- und Einspritzaggregat besteht aus einem Plastifizierzylinder mit einer axial verschiebbaren Plastifizierschnecke und die Vorkammereinspritzeinheit aus einem Massezylinder mit axial verschiebbarem Spritzkolben. Die Sammelräume vor der Schneckenspitze des Plastifizier- und Einspritzaggregates und vor dem Spritzkolben der Vorkammereinspritzeinheit sind über Bohrungen und Kanäle miteinander verbindbar und von in den Bohrungen angebrachten Absperrvorrichtungen voneinander trennbar. Beide Sammelräume stehen über Bohrungen und Kanäle mit einem Düsenkanal einer Einspritzdüse, die in einer zentralen Spritzachse angeordnet ist, in Verbindung. Eine solche gattungsgemäße Lösung wird in der DEOS 4305202 beschrieben. Als problematisch wird die Fließkanalgestaltung bei solchen Spritzeinheiten von der Plastifiziereinheit zur Vorkammereinspritzeinheit angesehen, durch die es zu Schmelzeablagerungen im Sammelraum der Vorkammereinspritzeinheit kommt, in deren Folge Materialzersetzungen eintreten können. Dadurch bedingt sind sehr oft und zeitraubende Reinigungsarbeiten erforderlich bzw. treten Qualitätsmängel in der Fertigung durch chemische Strukturveränderungen des Kunststoffmaterials auf. Bei einem Materialwechsel, hinsichtlich des Kunststoffmaterials und/oder dessen Farbe, was bei Kleinserienfertigungen in der Praxis sehr oft auftreten kann, wiederholen sich diese Probleme jeweils.
Zur Beseitigung dieser Nachteile wird dazu in der DEOS 4305202 eine verbesserte Fließkanalgestaltung vorgeschlagen, bei der der Hauptförderkanal von der Plastifiziereinheit stirnseitig in den äußeren Randbereich des Sammelraumes vor den Spritzkolben der Vorkammereinspritzeinheit mündet. Aus dem Sammelraum führt der in der Spritzachse angeordnete Spritzkanal zur Spritzdüse. In den Spritzkanal münden außerdem eine oder mehrere Nebenleitungen aus dem Sammelraum, die spitzwinklig zur Spritzachse verlaufen und in der äußeren Randzone im Abstand zum einmündenden Hauptförderkanal angeordnet sind. Der Vorteil der Lösung besteht darin, daß durch diese Fließkanalgestaltung und die Ausbildung des Spritzkolbens als Schaber, der Sammelraum nach jedem Spritzzyklus fast vollständig über den Spritzkanal und die Nebenleitung(en) entleert und evtl. verbleibende Materialreste, die dann vorgelagert sind, im nächstfolgenden Zyklus ausgestoßen werden. Von Nachteil bei dieser Lösung ist, daß diese Kunststoffspritzeinheit nur immer über die Vorkammereinspritzeinheit betrieben werden kann. Ein separater Spritzvorgang nur durch das Plastifizier- und Einspritzaggregat ohne die Vorkammereinspritzeinheit ist durch die vorgesehene Fließkanalgestaltung nicht möglich. Das kann insofern problematisch sein, da im Spritzgießbetrieb, je nach Auftragslage, nicht immer Spritzgußteile zu produzieren sind, die ein großes Plastifiziervolumen und eine Vorkammereinspritzeinheit erfordern. Dadurch muß der Spritzgießbetrieb auf dieser Spritzgießmaschine eingestellt werden oder aber die geschmolzene Plastmasse muß unnötig lange Fließwege zurücklegen. Ferner verschlechtert sich bei dieser Anordnung der Fließkanäle der energetische Wirkungsgrad, da die Vorkammereinspritzeinheit mitbetrieben werden muß und die Lohn- und Materialstückkosten steigen, weil sich die Zyklusszeit erheblich verlängert. Ein weiterer Nachteil besteht darin, daß während des Einspritzvorganges über die Vorkammereinspritzeinheit keine Masse in der Plastifiziereinheit aufgeschmolzen und bevorratet werden kann. Das resultiert daraus, daß die in der Plastifiziereinheit axial verschiebbare Plastifizierschnecke während dieser Zeit stillgelegt ist und die Funktion einer Rückstromsperre erfüllen muß, damit keine Masse in die Plastifiziereinheit zurückströmen kann.
Aus einem Spritzgießmaschinen Prospekt der Firma HUSKY vom Oktober 1992 ist ferner eine Zweistufen-Kunststoffspritzeinheit bekannt, die aus zwei Plastifiziereinheiten besteht, die über ein Kopfstück mit einer Vorkammereinspritzeinheit verbunden sind. Die Plastifiziereinheiten sind spitzwinklig zueinander und horizontal parallel zur und über der Vorkammereinspritzeinheit angeordnet. Vor der Vorkammereinspritzeinheit befindet sich ein Verteilerventil, über das die aufgeschmolzene Masse in den Sammelraum der Vorkammereinspritzeinheit und von dort bei Ausführung des Spritzhubes in das Formwerkzeug gelangt. Von Vorteil dabei ist, daß der Plastifizierprozeß während des Einspritzvorganges durch die axial verschiebbaren Plastifizierschnecken nicht unterbrochen werden muß. Der Nachteil besteht jedoch darin, daß kein Spülvorgang nach jedem Spritzvorgang erfolgt, wodurch es zu Materialablagerungen im Sammelraum vor dem Spritzkolben kommt, was nachteilige Auswirkungen auf die Produktqualität hat. Hinzu kommt, daß bei einem Material- und/oder Farbwechsel sehr zeit- und kostenaufwendige Reinigungsarbeiten erforderlich sind.

Ferner ist aus einem Spritzgießmaschinen Prospekt der Fa. Battenfeld (P.AD.23-19e DH 10/92 H S. 66 bis 69) eine gattungsgemäße Spritzgießmaschine bekannt, bei der die Plastifiziereinheit spitzwinklig und oberhalb von der Vorkammereinspritzeinheit angeordnet ist. Über ein Verbindungsstück wird die in der Plastifiziereinheit aufgeschmolzene Kunststoffmasse vor den Kolben der Vorkammereinspritzeinheit befördert. Auch bei dieser Lösung ist kein vollständiger Spülprozeß nach jedem Spritzhub gewährleistet. Ebenso ist aus den Prospektunterlagen nicht erkennbar, daß während der Einspritzphase der Plastifizierprozeß fortgesetzt werden kann bzw. die Plastifiziereinheit ohne die Vorkammereinspritzeinheit als Spritzeinheit betrieben werden kann.

Ein weiterer Nachteil aller bisher bekannten Lösungen besteht darin, daß durch die bauliche Anordnung der Plastifiziereinheit zur Vorkammereinspritzeinheit ein Eindringen dieser Aggregate in die feste Werkzeugaufspannplatte nicht möglich ist. Aus diesem Grunde ist eine sehr lange Einspritzdüse erforderlich, um die Masse in das Formwerkzeug einzuspritzen. Bekannt sind aus der Praxis bisher Lösungen, bei denen mit Hilfe einer Vorkammereinspritzeinheit Schußgewichte von 25 kg bis 50 kg verwirklicht worden sind. Es bestehen jedoch Forderungen, Schußgewichte von 150 kg zu realisieren. Dadurch bedingt ergeben sich entsprechend größere Formwerkzeuge, die größere Werkzeugaufspannplatten zur Folge haben und dementsprechend extrem lange Einspritzdüsen erfordern. Eine lange Einspritzdüse hat jedoch in verarbeitungstechnischer Hinsicht durch den langen Fließweg sehr viele Nachteile. So ist die Temperaturführung sehr kompliziert und kostenaufwendig und zwangsläufig wird die Produktqualität insbesondere bei thermisch empfindlichen Werkstoffen nachteilig beeinflußt.

Aufgabe der Erfindung ist es, eine Kunststoffspritzeinheit für große Spritzvolumen von bis zu 150 kg Schußgewicht und kurzen Fließwegen in der Einspritzdüse zu entwickeln, bei der die Plastifiziereinheit unabhängig von der Vorkammereinspritzeinheit als selbständige Spritzeinheit einsetzbar ist, im gemeinsamen Betrieb der Plastifiziereinheit und der Vorkammereinspritzeinheit, die Plastifiziereinheit auch während des Einspritzzyklusses mit voller Leistung weiter plastifizieren kann und bei jedem Spritzgießzyklus durch eine entsprechende Fließkanalgestaltung ein annähernd vollständiger Masseaustausch vor dem Spritzkolben der Vorkammereinspritzeinheit gewährleistet ist.
Erfindungsgemäß wird die Aufgabe dadurch gelöst, daß das Plastifizier- und Einspritzaggregat und die Vorkammereinspritzeinheit stirnseitig über ein Flanschelement lösbar miteinander verbunden sind. Daran anliegend ist ein weiteres Flanschelement lösbar befestigt, an dem die Einspritzdüse angeordnet ist. Die Spritzachse von Plastifizier- und Einspritzaggregat und Vorkammereinspritzeinheit sind am Mündungsende im Flanschelement annähernd im gleichen Abstand gegenüberliegend zur zentralen Spritzachse der Einspritzdüse angeordnet. Die Sammelräume vor der Plastifiziereinheit und vor der Vorkammereinspritzeinheit sind durch entgegengesetzt zur Fließrichtung angeordnete Rückschlagventile absperrbar. In Fließrichtung befinden sich hinter den Sperrelementen der Rückschlagventile Ventilräume, die über radiale Verbindungskanäle im weiteren Flanschelement mit dem Düsenkanal der Einspritzdüse in der zentralen Spritzachse verbunden sind. Der radiale Verbindungskanal ist zwischen der zentralen Spritzachse und der Vorkammereinspritzeinheit durch ein Stellglied absperrbar. Ferner steht der Sammelraum der Vorkammereinspritzeinheit über eine achsparallel zur zentralen Spritzachse angeordnete Verbindungsbohrung mit dem radialen Verbindungskanal im Abschnitt zwischen dem Stellglied und der Spritzachse der Vorkammereinspritzeinheit in Verbindung. In der achsparallelen Verbindungsbohrung ist in einer bevorzugten Ausführungsform der Erfindung ein Rückschlagventil so angeordnet, daß der Massefluß aus dem Sammelraum der Vorkammereinspritzeinheit in den Verbindungskanal gesperrt ist.

Die Vorteile der erfindungsgemäßen Lösung bestehen darin, daß es nunmehr möglich ist, die Plastifiziereinheit im Bedarfsfall unabhängig von der Vorkammereinspritzeinheit als selbständige Kunststoffspritzeinheit einzusetzen. Dies wird dann der Fall sein, wenn kleinere Spritzgußteile abzuspritzen sind, für die aufgrund des geringen Schußgewichtes eine Vorplastifizierung der Kunststoffmasse nicht erforderlich ist. Dazu wird dann lediglich durch Betätigung des Stellgliedes der Massezufluß zum Sammelraum der Vorkammereinspritzeinheit gesperrt. Ferner ist es nun möglich, daß für den vorgesehenen Spritzgießbetrieb über die Vorkammereinspritzeinheit während des Einspritzvorganges die Plastifiziereinheit mit voller Leistung weiterplastifizieren kann, da das vor dem Sammelraum der Plastifiziereinheit befindliche Rückschlagventil den Rückfluß der Masse in die Plastifiziereinheit verhindert. Damit wird eine wesentliche Leistungssteigerung und eine Verkürzung der Zykluszeit gegenüber bekannten Kunststoffspritzeinheiten mit Vorkammereinspritzeinheiten erreicht. Zur Erreichung der erwünschten Spülwirkung ist in der weiteren Ausgestaltung der Erfindung gemäß den Unteransprüchen der Spritzkolben der Vorkammereinspritzeinheit vor seinem Dichtkolben zweistufig ausgebildet. Der im Durchmesser größere Kolben bildet mit der Innenbohrung des Massezylinders, dem Dichtkolben und dem ersten Flanschelement einen als Ringkanal gestalteten ersten Sammelraum, in den die Verbindungsbohrung vom radialen Verbindungskanal mündet. Der im Durchmesser kleinere Kolben wird von einer Bohrung im ersten Flanschelement aufgenommen und bildet stirnseitig mit dieser einen zweiten Sammelraum, der mit dem ersten Sammelraum über eine axiale Bohrung und eine radiale Bohrung im Spritzkolben verbunden ist. Die Öffnung der radialen Bohrung im Spritzkolben ist gegenüberliegend von der Mündung der Verbindungsbohrung in den ersten Sammelraum angeordnet. Die erfindungsgemäße Fließkanalgestaltung hat den Vorteil, daß mit jedem Füll- und Einspritzvorgang ein Spülvorgang erreicht wird, durch den ein annähernd vollständiger Masseaustausch vor dem Spritzkolben der Vorkammereinspritzeinheit stattfindet. Dadurch ist ein Material- und/oder Farbwechsel während des Spritzgießbetriebes unproblematisch zu realisieren. Die im Verarbeitungsprozeß geforderte hohe und bisher praktisch nicht realisierte Durchsatzleistung von 150 kg pro Spritzgießzyklus hat ferner zur Folge, daß die Plastifiziereinheit und die Vorkammereinspritzeinheit jeweils eine sehr voluminöse Bauform erreichen. Ein weiterer wesentlicher Vorteil der Erfindung besteht nun darin, daß mit der Anordnung der beiden Flanschelemente einerseits eine stabile und funktionssichere Verbindung zwischen der Plastifiziereinheit und der Vorkammereinspritzeinheit erreicht wird. Andererseits wird mit der annähernd symmetrischen Anordnung der Plastifiziereinheit und der Vorkammereinspritzeinheit zur zentralen Spritzachse eine relativ kurze und sehr günstige Fließkanalgestaltung erzielt, was wiederum von wesentlichem Einfluß auf die Produktqualität ist.
Gemäß der Erfindung kann die Verbindungsbohrung zwischen dem Sammelraum der Vorkammereinspritzeinheit und dem radialen Verbindungskanal unterschiedlich ausgebildet sein. Als vorteilhaft wird es angesehen, wenn in der Verbindungsbohrung ein Rückschlagventil so angeordnet ist, daß während des Einspritzvorganges ein Masserückfluß aus dem Sammelraum, von der Vorkammereinspritzeinheit nicht möglich ist und ein kontinuierlicher Spülvorgang erreicht wird.

Eine kostengünstigere andere Variante sieht vor, daß die Verbindungsbohrung einen Querschnitt hat, der wesentlich kleiner ist als der Querschnitt des Düsenkanals vor dem Sperrelement von der Vorkammereinspritzeinheit. Die dabei erreichte Spülwirkung ist jedoch weniger effektiv, da während des Einspritzvorganges auch Masse über die Verbindungsbohrung wieder zurückströmen kann.

Die Erfindung soll nachstehend in einem Ausführungsbeispiel näher erläutert werden. In den zugehörigen Zeichnungen ist dargestellt
- Fig. 1: Gesamtansicht einer Kunststoffspritzeinheit für große Spritzvolumen
- Fig. 2: Längsschnitt durch das Plastifizier- und Einspritzaggregat und die Vorkammereinspritzeinheit im gemeinsamen Anschlußbereich
- Fig. 3: Eine andere Ausführungsform nach Figur 2

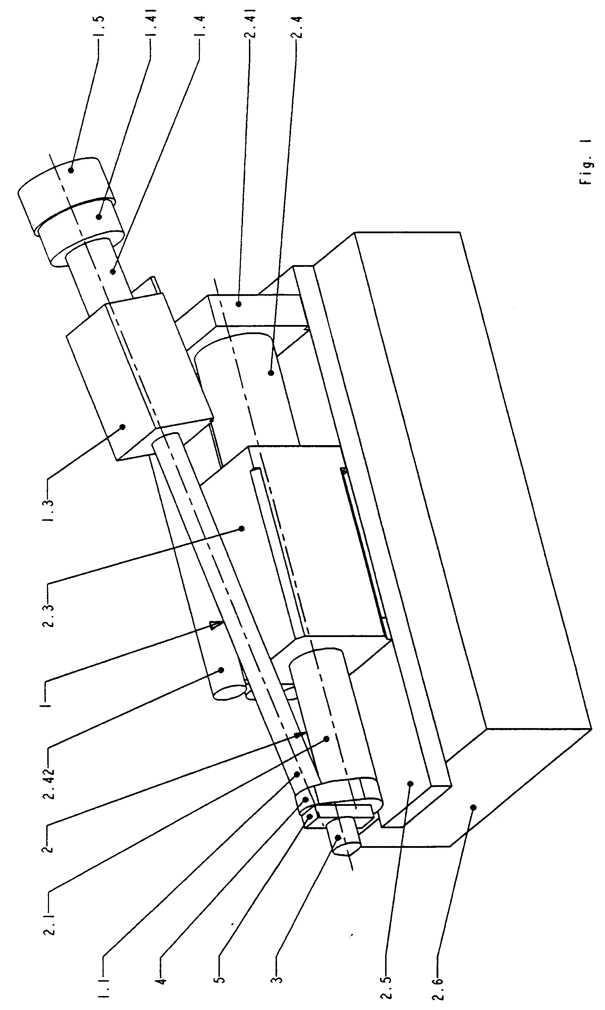

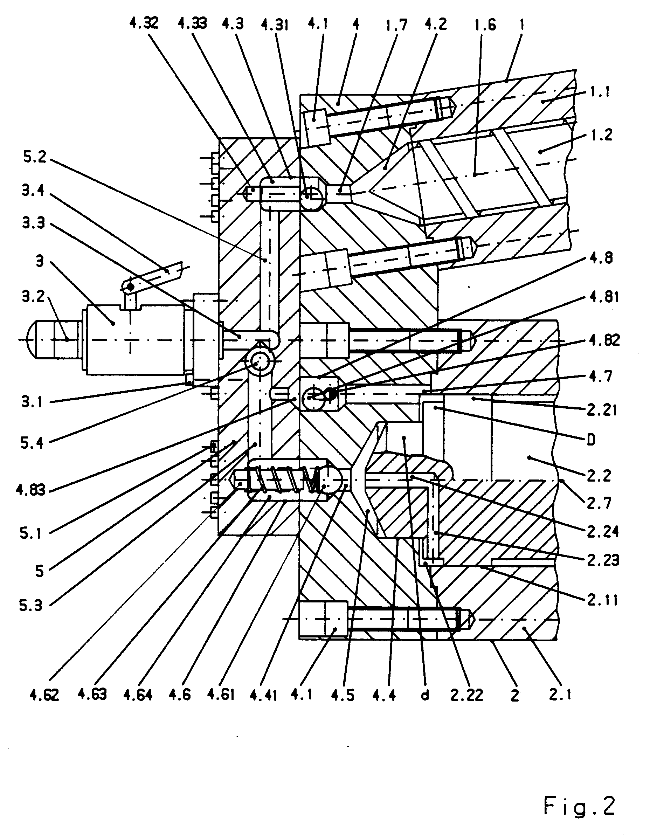

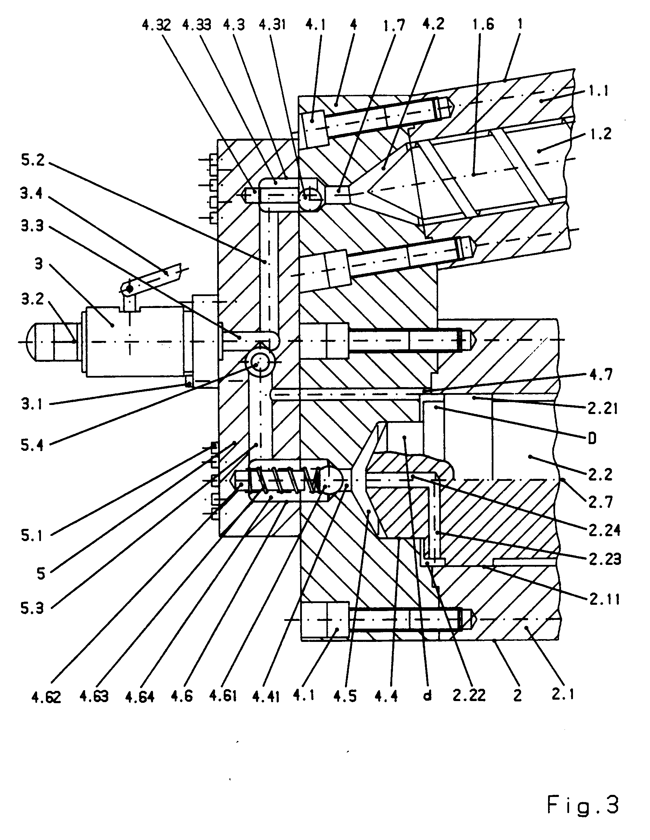

In der Figur 1 ist zunächst zum allgemeinen Verständnis die Gesamtansicht einer Kunststoffspritzeinheit für große Spritzvolumen, bestehend aus einem Plastifizier- und Einspritzaggregat 1 und einer Vorkammereinspritzeinheit 2 schematisch dargestellt. Das Plastifizier- und Einspritzaggregat 1 ist spitzwinklig zur und oberhalb von der Vorkammereinspritzeinheit 2 angeordnet und beide sind im Mündungsbereich über einen gemeinsamen Anschluß, der später noch näher erläutert wird, miteinander verbunden. Das Plastifizier- und Einspritzaggregat 1 besteht aus dem Plastifizierzylinder 1.1 mit der Plastifizierschnecke 1.2, die in dieser Figur nicht dargestellt ist und einem Verbindungsstück 1.3, an das sich der Spritzzylinder 1.4 anschließt. Am Ende des Spritzzylinders 1.4 ist ein Zylinderdeckel 1.41 befestigt, der gleichzeitig als Anschlußflansch für den Rotationsantrieb 1.5 dient und z. B. als Hydromotor ausgebildet sein kann. Die darunter befindliche Vorkammereinspritzeinheit 2 besteht aus dem Massezylinder 2.1 und dem Spritzkolben 2.2, der hier ebenfalls nicht dargestellt ist. Der Massezylinder 2.1 wird außen in einem Verbindungsgehäuse 2.3 aufgenommen, an dessen anderem Ende sich der hydraulische Einspritzzylinder 2.4 befindet, der sich mit seinem Deckel 2.41 auf einem Träger 2.5 abstützt. Für die An- und Abfahrbewegung der Einspritzdüse 3 an das nicht dargestellte Formwerkzeug mit Formschließeinrichtung ist das Plastifizier- und Einspritzaggregat 1 mit der Vorkammereinspritzeinheit 2 durch ebenfalls nicht dargestellte Düsenfahrzylinder auf dem Träger 2.5 längsverschiebbar. Der Träger 2.5 ist für den Ausbau der Plastifizierschnecke 1.2 gegenüber dem Untersatz 2.6 verschwenkbar. Seitlich vom Verbindungsgehäuse 2.3 ist ein Kolbenspeicher 2.42 angeordnet, durch den das notwendige Ölvolumen für die Ausführung des Einspritzhubes bereitgestellt wird. Aus den Schnittdarstellungen in Fig. 2 und 3 ist erkennbar, daß das Plastifizier- und Einspritzaggregat 1 und die Vorkammereinspritzeinheit 2 stirnseitig über ein erstes Flanschelement 4 durch eine Schraubverbindung 4.1 lösbar miteinander verbunden sind. Mit dem ersten Flanschelement 4 ist ein zweites Flanschelement 5 über eine Schraubverbindung 5.1 lösbar verbunden, an dem wiederum die Einspritzdüse 3 mit einer Schraubverbindung 3.1 lösbar befestigt ist. Die Spritzachse 1.6 des Plastifizier- und Einspritzaggregates 1 hat am Mündungsende des Flanschelementes 4 annähernd den gleichen Abstand zur zentralen Spritzachse 3.2 der Einspritzdüse 3, wie die dazu gegenüberliegend angeordnete Spritzachse 2.7 von der Vorkammereinspritzeinheit 2. Mit dieser Anordnung wird eine sehr kompakte und funktionssichere Verbindung zwischen dem Plastifizier- und Einspritzaggregat und der Vorkammereinspritzeinheit gewährleistet, die durch das große Spritzvolumen und die damit verbundenen großen Abmessungen der beiden Funktionseinheiten erforderlich ist.
Ein weiterer Vorteil dieser Anordnung besteht darin, daß der Verlauf der Fließkanäle für die Kunststoffmasse günstig gestaltet werden kann, was nachfolgend gemäß Figur 2 näher erläutert wird. Vor der Schneckenspitze der Plastifizierschnecke 1.2 befindet sich im Flanschelement 4 ein Sammelraum 4.2, der durch die im Plastifizierzylinder 1.1 axial verschiebbare Plastifizierschnecke 1.2 hinsichtlich seines Volumens veränderbar ist. Entgegengesetzt zur Fließrichtung ist der Sammelraum 4.2 durch ein Rückschlagventil 4.3 vor der Düsenbohrung 1.7 absperrbar, das aus einer Kugel 4.31 besteht, die durch einen Anschlag 4.32 in ihrem Bewegungsspielraum begrenzt wird. Der Ventilraum 4.33 des Rückschlagventils 4.3 ist technologisch bedingt in der Trennebene zwischen den Flanschelementen 4 und 5 angeordnet. Vom Ende des Ventilraumes 4.33 führt ein radialer Verbindungskanal 5.2 zum Düsenkanal 3.3 in der zentralen Spritzachse 3.2 der Einspritzdüse 3. Der Düsenkanal 3.3 ist durch einen hydromechanisch betätigten Verschluß 3.4 absperrbar.

Nachfolgend wird das Fließkanalsystem zur Vorkammereinspritzeinheit 2 und von dort zum Düsenkanal 3.3 beschrieben. Der Spritzkolben 2.2 von der Vorkammereinspritzeinheit ist als Stufenkolben ausgebildet und besitzt einen Dichtkolben 2.21, der in der Bohrung 2.11 des Massezylinders 2.1 dichtend anliegt und darin längsverschiebbar ist. Vor dem Dichtkolben 2.21 ist der Spritzkolben 2.2 zweistufig ausgebildet. Der im Durchmesser größere Kolben D bildet mit der Bohrung 2.11 im Massezylinder 2.1, dem Dichtkolben 2.21 und dem Flanschelement 4 einen als Ringkanal gestalteten ersten Sammelraum 2.22. Der im Durchmesser kleinere Kolben d wird in einer Bohrung 4.4 des Flanschelementes 4 aufgenommen und bildet stirnseitig mit der Bohrung 4.4 einen zweiten Sammelraum 4.5. Aus dem Sammelraum 4.5 führt in der Spritzachse 2.7 eine Bohrung 4.41, die an ihrem Ende und entgegengesetzt zur Fließrichtung durch ein federbelastetes Rückschlagventil 4.6 verschließbar ist. Das Rückschlagventil 4.6 besteht aus einer Kugel 4.61, die durch einen Anschlag 4.62 in ihrem Bewegungsspielraum begrenzt wird und aus einer Feder 4.63, die an der Kugel 4.61 anliegt. Der Ventilraum 4.64 des Rückschlagventils 4.6 ist ebenfalls technologisch bedingt in der Trennebene zwischen den Flanschelementen 4 und 5 angeordnet. Vom Ende des Ventilraumes 4.64 führt ein radialer Verbindungskanal 5.3 zum Düsenkanal 3.3 in der zentralen Spritzachse 3.2. Zur Gewährleistung eines separaten Spritzgießbetriebes durch das Plastifizier- und Einspritzaggregat 1 ohne Vorkammereinspritzeinheit 2 ist der radiale Verbindungskanal 5.3 durch ein Stellglied 5.4, das sich unmittelbar vor dem zentralen Düsenkanal 3.3 befindet, absperrbar und von außen betätigbar, was nicht näher dargestellt wurde.
Der Massezufluß vom Plastifizier- und Einspritzaggregat 1 zum ersten und zweiten Sammelraum 2.22 bzw. 4.5 in der Vorkammereinspritzeinheit 2 erfolgt über eine Verbindungsbohrung 4.7. Die Verbindungsbohrung 4.7 ist achsparallel zur zentralen Spritzachse 3.2 angeordnet und verbindet den radialen Verbindungskanal 5.3 hinter dem Stellglied 5.4 mit dem ersten Sammelraum 2.22.
Gemäß Figur 2 ist in der achsparallelen Verbindungsbohrung 4.7 ein Rückschlagventil 4.8 angeordnet, durch das der Masserückfluß während des Einspritzvorganges über die Verbindungsbohrung 4.7 verhindert werden soll. Das Rückschlagventil 4.8 besteht aus einer Kugel 4.81, die in Fließrichtung der Masse an einem Anschlag 4.82 anliegt, so daß der Massedurchfluß durch den Ventilraum 4.83 zum Sammelraum 2.22 gewährleistet ist.
In Figur 3 ist eine Ausführungsform dargestellt, bei der in der Verbindungsbohrung 4.7 kein Rückschlagventil angeordnet ist. In diesem Falle ist es jedoch zur Gewährleistung eines guten Spülvorganges, der noch an anderer Stelle erläutert wird, notwendig, daß die Düsenbohrung 4.41 wesentlich größer ausgebildet wird als die Verbindungsbohrung 4.7. Mit dieser Maßnahme wird erreicht, daß aufgrund des größeren Strömungswiderstandes in der Verbindungsbohrung 4.7 die größere Menge an Masse durch die Bohrung 4.41 strömt, wodurch die Spülung gewährleistet ist.
In beiden Ausführungsvarianten der Erfindung ist der erste Sammelraum 2.22 in der ausgefahrenen Endstellung des Spritzkolbens 2.2 über eine radiale Verbindungsbohrung 2.23 im größeren Stufenkolben D, die in eine axiale Bohrung 2.24 mündet, mit dem zweiten Sammelraum 4.5 verbunden.

Nachstehend soll die Wirkungsweise der erfindungsgemäßen Lösung kurz erläutert werden.
Die im Plastifizier- und Einspritzaggregat 1 aufgeschmolzene Masse strömt aus dem Sammelraum 4.2 über die Düsenbohrung 1.7 in den Ventilraum 4.3 und von dort in den radialen Verbindungskanal 5.2. Da der Austritt der Masse aus dem zentralen Düsenkanal 3.3 durch den Verschluß 3.4 geschlossen ist, strömt die Masse weiter in den radialen Verbindungskanal 5.3 und von dort in die Verbindungsbohrung 4.7 in den als Ringkanal ausgebildeten ersten Sammelraum 2.22, wo sie sich verteilt. Über die radiale Bohrung 2.23 und die axiale Bohrung 2.24 dringt sie danach weiter in den zweiten Sammelraum 4.5 vor. Gegen den Widerstand eines einstellbaren Staudruckes im hydraulischen Einspritzzylinder 2.4 bewegt sich nun der Spritzkolben 2.2 kontinuierlich in seine rückwärtige Lage. Dabei verbinden sich in dem Moment, wo der kleine Stufenkolben d aus der Bohrung 4.4 vollständig ausgefahren ist, die beiden bis dahin voneinander getrennten Sammelräume 2.22 und 4.5 zu einem großen Sammelraum. Während des Füllvorganges kann keine Masse aus dem Ventilraum 4.64 über die Bohrung 4.41 in den Sammelraum 4.5 strömen, da dieser Weg durch das Rückschlagventil 4.6 gesperrt ist. Erst nach Beendigung des Füllvorganges und mit Beginn des Einspritzvorganges wird durch den Spritzkolben 2.2 die Masse aus dem großen Sammelraum in entgegengesetzter Richtung über die Bohrung 4.41 in den Ventilraum 4.64 gegen den Widerstand der Feder 4.63 von dort in die radiale Bohrung 5.3 und weiter in den zentralen Düsenkanal 3.3 von der Einspritzdüse gedrückt. Der Verschluß 3.4 ist nun geöffnet und die Masse kann in das nicht dargestellte Formwerkzeug eingespritzt werden. Durch das während des Einspritzvorganges herrschende Druckgefälle wird durch das Rückschlagventil 4.8 der Rückfluß der Masse über die Verbindungsbohrung 4.7 gesperrt.
Dadurch werden mit jedem folgenden Spritzzyklus vorhandene Materialreste ausgestoßen. Um einen guten Spülvorgang zwischen jedem Spritzzyklus zu erreichen, ist es ferner günstig, wenn die Öffnung der radialen Bohrung 2.23 im Spritzkolben 2.2 gegenüberliegend von der Mündung der Verbindungsbohrung 4.7 in den ersten Sammelraum 2.22 angeordnet ist. Dadurch werden ebenfalls im jeweils folgenden Spritzzyklus vorhandene Materialreste wie in einem Kreislauf vollständig ausgestoßen.

Durch den herrschenden hohen Einspritzdruck, der sich über die radiale Bohrung 5.2 in den Ventilraum 4.33 fortsetzt, wird die Düsenbohrung 1.7 durch die Kugel 4.31 vom Rückschlagventil 4.3 verschlossen. Dadurch ist es nunmehr möglich, daß unabhängig vom Einspritzvorgang der Vorkammereinspritzeinheit 2, der Plastifiziervorgang im Plastifizier- und Einspritzaggregat fortgesetzt werden kann. Die aufgeschmolzene Masse kann durch die axial verschiebbare Plastifizierschnecke 1.2 im Sammelraum 4.2 bevorratet werden, wodurch der nächste Spritzgießvorgang zeitlich schneller erfolgen kann. Ein weiteres Anliegen der Erfindung bestand darin, im Bedarfsfall auch einen Spritzgießbetrieb ohne Vorkammereinspritzeinheit zu gewährleisten. Möglich ist das nun durch die Ausbildung des Plastifizieraggregates als Einspritzaggregat und die Absperrmöglichkeit des radialen Verbindungskanals 5.3 zur Vorkammereinspritzeinheit 2 durch das Stellglied 5.4.

### Aufstellung der verwendeten Bezugszeichen

- 1: - Plastifizier- und Einspritzaggregat
- 1.1: - Plastifizierzylinder
- 1.2: - Plastifizierschnecke
- 1.3: - Verbindungsstück
- 1.4: - Spritzzylinder
- 1.41: - Zylinderdeckel
- 1.5: - Rotationsantrieb
- 1.6: - Spritzachse
- 1.7: - Düsenbohrung
- 2: - Vorkammereinspritzeinheit
- 2.1: - Massezylinder
- 2.11: - Bohrung
- 2.2: - Spritzkolben
- 2.21: - Dichtkolben
- 2.22: - Sammelraum
- 2.23: - Bohrung
- 2.24: - Bohrung
- 2.3: - Verbindungsgehäuse
- 2.4: - Einspritzzylinder
- 2.41: - Deckel
- 2.42: - Kolbenspeicher
- 2.5: - Träger
- 2.6: - Untersatz
- 2.7: - Spritzachse
- 3: - Einspritzdüse
- 3.1: - Schraubverbindung
- 3.2: - zentrale Spritzachse
- 3.3: - Düsenkanal
- 3.4: - Verschluß
- 4: - Flanschelement
- 4.1: - Schraubverbindung
- 4.2: - Sammelraum
- 4.3: - Rückschlagventil
- 4.31: - Kugel
- 4.32: - Anschlag
- 4.33: - Ventilraum
- 4.4: - Bohrung
- 4.41: - Bohrung
- 4.5: - Sammelraum
- 4.6: - Rückschlagventil
- 4.61: - Kugel
- 4.62: - Anschlag
- 4.63: - Feder
- 4.64: - Ventilraum
- 4.7: - Verbindungsbohrung
- 4.8: - Rückschlagventil
- 4.81: - Kugel
- 4.82: - Anschlag
- 4.83: - Ventilraum
- 5: - Flanschelement
- 5.1: - Schraubverbindung
- 5.2: - Verbindungskanal
- 5.3: - Verbindungskanl
- 5.4: - Stellglied
- D: - großer Kolben des Stufenkolbens
- d: - kleiner Kolben des Stufenkolbens

## Patentansprüche

1. Kunststoffspritzeinheit für große Spritzvolumen bestehend aus einem Plastifizier- und Einspritzaggregat und einer Vorkammereinspritzeinheit, die mechanisch lösbar, parallel oder spitzwinklig zueinander und miteinander verbunden sind, das Plastifizier- und Einspritzaggregat aus einem Plastifizierzylinder mit einer axial verschiebbaren Plastifizierschnecke und die Vorkammereinspritzeinheit aus einem Massezylinder mit axial verschiebbarem Spritzkolben bestehen, die Sammelräume vor der Schneckenspitze des Plastifizier- und Einspritzaggregates und vor dem Spritzkolben der Vorkammereinspritzeinheit über Bohrungen und Kanäle miteinander verbindbar und von in den Bohrungen angebrachten Absperrvorrichtungen voneinander trennbar sind und beide Sammelräume über Bohrungen und Kanäle mit einem Düsenkanal einer Einspritzdüse in einer zentralen Spritzachse in Verbindung stehen, dadurch gekennzeichnet, daß
- das Plastifizier- und Einspritzaggregat (1) und die Vorkammereinspritzeinheit (2) stirnseitig über ein Flanschelement (4) lösbar miteinander verbunden sind und daran anliegend ein zweites Flanschelement (5) lösbar befestigt ist, an dem die Einspritzdüse (3) lösbar angeordnet ist,
- die Spritzachse (1.6, 2.7) von Plastifizier- und Einspritzaggregat (1) und Vorkammereinspritzeinheit (2) am Mündungsende im Flanschelement (4) annähernd im gleichen Abstand gegenüberliegend zur zentralen Spritzachse (3.2) der Einspritzdüse (3) angeordnet sind,
- die Sammelräume (4.2, 4.5 ) vor dem Plastifizier- und Einspritzaggregat (1) und der Vorkammereinspritzeinheit (2) durch entgegengesetzt zur Fließrichtung angeordnete Rückschlagventile (4.3, 4.6) absperrbar sind und in Fließrichtung hinter den Sperrelementen der Rückschlagventile (4.3, 4.6) Ventilräume (4.33, 4.64) vorhanden sind, die über radiale Verbindungskanäle (5.2, 5.3) im Flanschelement (5) mit dem Düsenkanal (3.3) der Einspritzdüse (3) in der zentralen Spritzachse (3.2) verbunden sind,
- der radiale Verbindungskanal (5.3) zwischen der zentralen Spritzachse (3.2) und der Vorkammereinspritzeinheit (2) durch ein Stellglied (5.4) absperrbar ist und der Sammelraum (2.22) der Vorkammereinspritzeinheit (2) über eine achsparallel zur zentralen Spritzachse (3.2) angeordnete Verbindungsbohrung (4.7) mit dem radialen Verbindungskanal (5.3) zwischen dem Stellglied (5.4) und der Spritzachse (2.7) der Vorkammereinspritzeinheit (2) in Verbindung steht und in der achsparallelen Verbindungsbohrung (4.7) ein Rückschlagventil (4.8) so angeordnet ist, daß der Massefluß aus dem Sammelraum (2.22) der Vorkammereinspritzeinheit (2) in den Verbindungskanal (5.3) gesperrt ist.

2. Spritzeinheit nach Anspruch 1, dadurch gekennzeichnet, daß der Spritzkolben (2.2) der Vorkammereinspritzeinheit (2) vor seinem Dichtkolben (2.21) zweistufig ausgebildet ist und der im Durchmesser größere Kolben (D) mit der Bohrung (2.11) im Massezylinder, dem Dichtkolben (2.21) und dem Flanschelement (4) einen als Ringkanal gestalteten ersten Sammelraum (2.22) bildet, in den die Verbindungsbohrung (4.7) vom radialen Verbindungskanal (5.3) mündet und der im Durchmesser kleinere Kolben (d) von einer Bohrung (4.4) im Flanschelement (4) aufgenommen wird und stirnseitig mit dieser einen zweiten Sammelraum (4.5) bildet, der mit dem ersten Sammelraum (2.22 ) über eine axiale Bohrung (2.24) und eine radiale Bohrung (2.23) im Spritzkolben (2.2) verbunden ist.

3. Spritzeinheit nach Anspruch 2, dadurch gekennzeichnet, daß die Öffnung der radialen Bohrung (2.23) im Spritzkolben (2) gegenüberliegend von der Mündung der Verbindungsbohrung (4.7) in den ersten Sammelraum (2.22) angeordnet ist.

4. Spritzeinheit nach Anspruch 1 und 3, dadurch gekennzeichnet, daß die Verbindungsbohrung (4.7) einen Querschnitt hat, der wesentlich kleiner ist als der Querschnitt der Bohrung (4.41) vor dem Rückschlagventil (4.6) von der Vorkammereinspritzeinheit (2), wobei das Rückschlagventil (4.8) in der Verbindungsbohrung (4.7) entfällt.

## Claims

1. Plastics spraying unit for large spraying volumes, consisting of a plasticizing and injection assembly and an antechamber injection unit which are mechanically detachable, parallel or at an acute angle relative to one another and connected to one another, the plasticising and injection assembly consists of a plasticizing cylinder with an axially displaceable plasticizing worm and the antechamber spraying unit of a mass cylinder with axially displaceable injection plunger, the collection compartments upstream of the worm tip of the plasticizing and injection assembly and upstream of the injection plunger of the ante-chamber injection unit are connectable to one another via bores and channels and separable from one another by shutoff devices accommodated in the bores and the two collection compartments are connected via bores and channels to a nozzle channel of an injection nozzle in a central spraying axis, characterised in that
- the plasticizing and injection assembly (1) and the antechamber injection unit (2) are connected detachably to one another at the front end by a flange element (4) and, adjacent thereto, a second flange element (5) is detachably secured, on which the injection nozzle (3) is detachably disposed,
- the injection axes (1.6, 2.7) of the plasticising and injection assembly (1) and the antechamber injection unit (2) are at the end where they issue in the flange element (4) disposed at approximately the same distance opposite the central injection axis (3.2) of the injection nozzle (3),
- the collection compartments (4.2, 4.5) upstream of the plasticizing and injection assembly (1) and the antechamber injection unit (2) can be shut off by check valves (4.3, 4.6) disposed in counter direction to the flow direction and there are provided downstream of the shut-off elements of the check valves (4.3, 4.6) valve chambers (4.33, 4.64) which are connected via radial connecting channels (5.2, 5.3) in the flange element (5) to the nozzle channel (3.3) of the injection nozzle (3) in the central injection axis (3.2),
- the radial connecting channel (5.3) between the central injection axis (3.2) and the antechamber injection unit (2) can be shut off by means of an actuator (5.4) and the collection compartment (2.22) of the antechamber injection unit (2) is connected via a connecting bore (4.7) disposed axially parallel with the central injection axis (3.2) to the radial connecting channel (5.3) between the actuator (5.4) and the injection axis (2.7) of the antechamber injection unit (2) and a check valve (4.8) is so disposed in the axially parallel connecting bore (4.7) that the mass flow out of the collection compartment (2.22) of the antechamber injection unit (2) into the connecting channel (5.3) is inhibited.

2. Spraying unit according to claim 1, characterised in that the spray plunger (2.2) of the antechamber injection unit (2) is formed in two stages upstream of its sealing piston (2.21) and the piston with the greater diameter (D) forms together with the bore (2.11) in the mass cylinder, the sealing piston (2.21) and the flange element (4) a first collection chamber (2.22) shaped as an annular channel, in which the connecting bore (4.7) issues from the radial connecting channel (5.3), and the piston with the smaller diameter (d) is taken up by a bore (4.4) in the flange element (4) and forms with the latter at the front end a second collection compartment (4.5), which is connected to the first collection compartment (2.22) via an axial bore (2.24) and a radial bore (2.23) in the spray plunger (2.2).

3. Spraying unit according to claim 2, characterised in that the opening of the radial bore (2.23) in the spraying plunger (2) is disposed opposite the point where the connecting bore (4.7) issues into the first collection compartment (2.22).

4. Spraying unit according to claims 1 and 3, characterised in that the connecting bore (4.7) has a cross-section which is substantially smaller than the cross-section of the bore (4.41) upstream of the check valve (4.6) of the ante-chamber injection unit (2), wherein the check valve (4.8) in the connecting bore (4.7) is omitted.

## Revendications

1. Dispositif d'injection de matière plastique pour injecter dans de grands volumes, comprenant :
- un dispositif de plastification et d'injection et un dispositif d'injection à préchambre, reliés de manière mécaniquement amovible, en parallèle ou suivant un angle aigu, le dispositif de plastification et d'injection se composant d'un cylindre préplastificateur avec une vis préplastificatrice coulissant axialement et le dispositif d'injection à préchambre se compose d'un cylindre de masse avec un piston d'injection coulissant axialement, les chambres collectrices en avant de la pointe d'injection du dispositif de plastification et d'injection et en avant du piston d'injection du dispositif d'injection à préchambre pouvant être reliées par les perçages et les canaux, et être séparées par des dispositifs d'arrêt prévus dans les perçages, les deux chambres collectrices sont reliées par des perçages et des canaux à un canal d'une buse d'injection suivant l'axe d'injection central,
caractérisé en ce que
- le dispositif de plastification et d'injection (1) et le dispositif d'injection à préchambre (2) sont reliés de manière amovible, du côté frontal par un premier élément de bride (4), un second élément de bride (5) adjacent pouvant y être fixé de manière amovible et portant de manière amovible la buse d'injection (3),
- l'axe d'injection (1.6, 2.7) du dispositif de plastification et d'injection (1) et le dispositif d'injection à préchambre (2) sont prévus à l'extrémité de l'embouchure dans l'élément de bride (4), sensiblement à la même distance par rapport à l'axe d'injection central (3.2) de la buse d'injection (3),
- les chambres collectrices (4.2, 4.5) devant le dispositif de plastification et d'injection (1) et le dispositif d'injection à préchambre (2) sont susceptibles d'être fermées par des clapets antiretour (4.3, 4.6) prévus de manière opposée à la direction de l'écoulement et dans le sens de l'écoulement, derrière les éléments d'obturation des clapets antiretour (4.3, 4.6), il y a des chambres de soupape (4.33. 4.64) reliées par des canaux de liaison radiaux (5.2, 5.3) de l'élément de bride (5) avec le canal de buse (3.3) de la buse d'injection (3) suivant l'axe d'injection central (3.2),
- le canal de liaison radial (5.3) entre l'axe d'injection central (3.2) et le dispositif d'injection à préchambre (2) pouvant être fermé par un organe d'obturation (5.4) et la chambre collectrice (2.22) du dispositif d'injection à préchambre (2) est reliée par un perçage de liaison (4.7) parallèle à l'axe central d'injection (3.2) au canal de liaison radial (5.3) entre l'organe de réglage (5.4) et l'axe d'injection (2.7) du dispositif d'injection à préchambre (2) et le perçage de liaison (4.7) parallèle à l'axe comporte un clapet antiretour (4.8), et l'écoulement en masse de la chambre collectrice (2.22) du dispositif d'injection à préchambre (2) est coupé dans le canal de liaison (5.3).

2. Dispositif d'injection selon la revendication 1,
caractérisé en ce que
le piston d'injection (2.2) du dispositif d'injection à préchambre (2) est réalisé avec deux étages en avant de son piston d'étanchéité (2.21) et le piston (D) de plus grand diamètre forme avec l'alésage (2.1) dans le cylindre massique, et le piston d'étanchéité (2.21) et l'élément de bride (4), une première chambre collectrice (2.22) en forme de canal annulaire dans lequel débouche le perçage de liaison (4.7) du canal de liaison radial (5.3), et le piston de petit diamètre (d) est logé dans un alésage (4.4) de l'élément de bride (4) et forme du côté frontal avec celui-ci, une seconde chambre collectrice (4.5) reliée à la première chambre collectrice (2.22) par un perçage axial (2.24) et un perçage radial (2.23) dans le piston d'injection (2.2).

3. Dispositif d'injection selon la revendication 2,
caractérisé en ce que
l'ouverture du perçage radial (2.23) du piston d'injection (2) en regard de l'embouchure du perçage de liaison (4.7) et prévue dans la première chambre collectrice (2.22).

4. Dispositif d'injection selon les revendications 1 et 3,
caractérisé en ce que
le perçage de liaison (4.7) a une section sensiblement plus petite que la section du perçage (4.41) en avant du clapet antiretour (4.6) du dispositif d'injection à préchambre (2), le clapet antiretour (4.8) de la conduite de liaison (4.7) étant supprimé.
